# EUROPÄISCHE PATENTSCHRIFT

(11) **EP 2 295 206 B1**
(45) Veröffentlichungstag und Bekanntmachung des Hinweises auf die Patenterteilung: **02.07.2014**
(21) Anmeldenummer: 09173425.1
(22) Anmeldetag: 02.09.2008
(51) Int. Cl.: B25F 3/00, B25F 5/00, B23B 45/00, B23B 45/02, B25B 23/00, B25D 17/08

(54) **Elektrische Kombi-Handwerkzeugmaschine**
ELECTRIC COMBINED HAND-HELD POWER TOOL
MACHINE-OUTIL À MAIN ÉLECTRIQUE COMBINÉE

(30) Priorität: 10.10.2007 DE 102007048822
(43) Veröffentlichungstag der Anmeldung: 16.03.2011
(62) Teilanmeldung aus: 08803498.8
(73) Patentinhaber: Robert Bosch GmbH, 70442 Stuttgart (DE)
(72) Erfinder: Bohne, Ulrich, 72664 Kohlberg (DE)

(56) Entgegenhaltungen:
- DE-A1- 3 502 449
- DE-A1-102004 012 433
- DE-A1-102005 040 587
- FR-A- 2 625 931

## Beschreibung

Die Erfindung betrifft eine elektrische Handwerkzeugmaschine gemäß dem Oberbegriff des Anspruchs 1.

### Stand der Technik

Insbesondere für den Heimwerkermarkt ist bereits eine Vielzahl von elektrischen Handwerkzeugmaschinen bekannt, die entweder ausschließlich zum Bohren, zum Schrauben oder zum Hämmern vorgesehen oder für eine Kombination von zwei der genannten Tätigkeiten ausgelegt sind, wie beispielsweise zum Bohren und Schrauben oder zum drehenden und schlagenden Bohren. Zwar sind die bekannten Handwerkzeugmaschinen für den jeweils vorgesehenen Anwendungszweck optimiert, eignen sich jedoch zumeist entweder gar nicht oder nur schlecht für andere Aufgaben. Zum Beispiel sind Bohrschrauber optimal zum Schrauben und Bohren angepasst, sind jedoch zum Hämmern und damit zum Bohren von Löchern in Stein und Beton ungeeignet, da ein in die Werkzeughalterung eingesetztes Werkzeug nicht schlagend angetrieben werden kann. Schlagbohrmaschinen, die ein Rastenschlagwerk besitzen, decken zwar einen Großteil der möglichen Anwendungen beim Bohren ab, wie drehendes und schlagendes Bohren liefern jedoch beim schlagenden Bohren in Beton nur unbefriedigende Ergebnisse und sind darüber hinaus recht unhandlich, wodurch das genaue Bohren von kleinen Bohrlöchern in Metall und Holz und das Ansetzen eines Schraubwerkzeugs beim Eindrehen von Schrauben erschwert wird. Bohrhämmer sind durch ihr pneumatisches Schlagwerk zwar perfekt zum Bohren in Beton angepasst, sind jedoch meist ebenfalls unhandlich und daher wie Schlagbohrmaschinen zum Bohren von kleinen Bohrlöchern in Metall und Holz und zum Schrauben nur bedingt einsetzbar.

FR-2625931-A offenbart eine elektrische Handwerkzeugmaschine gemäß dem Oberbegriff des Anspruchs 1.

Ausgehend hiervon liegt der Erfindung die Aufgabe zugrunde, eine elektrische Handwerkzeugmaschine mit einem Akku zur Stromversorgung eines Antriebsmotors innerhalb eines Gehäuses der Handwerkzeugmaschine dahingehend zu verbessern, dass sie sich universell und einfach zum Bohren, Schrauben und Hämmern einsetzen lässt.

### Offenbarung der Erfindung

Diese Aufgabe wird durch eine elektrische Handwerkzeugmaschine mit den Merkmalen des Anspruchs 1 gelöst.

Der Erfindung liegt der Gedanke zugrunde eine einzige, für sämtliche Bohr- und Schraubanwendungen geeignete elektrische Handwerkzeugmaschine zu konzipieren, d.h. eine Handwerkzeugmaschine, mit der zum einen in allen gebräuchlichen Materialien, wie Holz, Metall, Mauerwerk und Beton, wahlweise mit und ohne Schlag gebohrt werden kann, und die zum anderen auch zum Schrauben nicht zu unhandlich ist. Dies ist bei einer kompakten und handlichen Handwerkzeugmaschine mit einem geringen Gewicht der Fall, bei der eine wahlweise zur Aufnahme eines Bohr-, Schlagbohr- bzw. Hämmer- und Schraubwerkzeugs geeignete Werkzeughalterung mit einem bisher nur bei Bohrhämmern eingesetzten pneumatischen Schlagwerk kombiniert ist, um einen universellen Einsatz der Handwerkzeugmaschine zum Bohren, Schlagbohren bzw. Hämmern und Schrauben zu ermöglichen. Zu diesem Zweck ist die Handwerkzeugmaschine für einen Akkubetrieb konzipiert, so dass sie zum einen kabellos und vom Stromnetz unabhängig ist und zum anderen mit einem kompakten und kleinen Gleichstromantriebsmotor ausgestattet werden kann, um das Werkzeug in der Werkzeughalterung drehend und/oder schlagend anzutreiben. Im Unterschied zu bekannten, mit einem Akku ausgestatteten Handwerkzeugmaschinen ist der Akku der erfindungsgemäßen Handwerkzeugmaschine jedoch nicht in einem separaten Akkupack sondern im Inneren des Gehäuses der Handwerkzeugmaschine untergebracht, um für ein kleinstmögliches Bauvolumen und eine die Arbeit mit der Handwerkzeugmaschine erleichternde Gewichtsverteilung zu sorgen. Mit besonderem Vorteil ist dazu vorgesehen, dass in zwei Schenkeln eines U-förmigen Griffteils des Gehäuses der erfindungsgemäßen Handwerkzeugmaschine jeweils ein oder mehrere Akkuzellen des Akkus untergebracht sind.

In einer bevorzugten Ausgestaltung umgibt den Griffteil eine Grifföffnung, wobei der Akku mehrere Zellen umfasst, von denen jeweils ein Teil vor und hinter der Grifföffnung im Griffteil untergebracht ist.
Mit einer solchen Handwerkzeugmaschine lässt sich nahezu jede der im Normalfall bei Heimwerkern anfallenden Aufgaben oder Tätigkeiten und ein Großteil der bei passionierten Heimwerkem anfallenden Aufgaben oder Tätigkeiten abdecken, nämlich das Bohren von Dübellöchern mit einem Durchmesser von bis zu 10 mm in Mauerwerk und Beton sowie das Einschrauben von passenden Schrauben in die verdübelten Dübellöcher, das drehende Bohren von Bohrlöchern in Metall mit einem Durchmesser von bis zu 8 mm und in Holz mit einem Durchmesser von bis zu 10 mm, sowie das Eindrehen von selbstschneidenden Schrauben mit einem Durchmesser von bis zu 6 mm in Holz. Die Handwerkzeugmaschine ist jedoch nicht nur für Heimwerker geeignet, sondern auch für professionelle Handwerker, bei denen hauptsächlich die zuvor genannten Aufgaben und Tätigkeiten anfallen und bei denen durch den Einsatz der erfindungsgemäßen Handwerkzeugmaschine das Mitführen von mehreren ähnlichen Handwerkzeugmaschinen, wie einer Schlagbohrmaschine und eines Akkuschraubers, vermieden werden kann. Mit anderen Worten ist es in vielen Fällen möglich, entweder drei speziell für die Anwendungen Bohren, Schrauben bzw. Hämmern oder zwei für Kombinationen dieser Anwendungen, wie Bohren und Schrauben oder drehendes und schlagendes Bohren, konzipierte Handwerkzeugmaschinen durch eine einzige Handwerkzeugmaschine zu ersetzen.

Das Schlagwerk ist dabei so ausgelegt, dass für seinen Antrieb die Motorleistung eines kleinen und kompakten Antriebsmotors ausreichend ist, der zweckmäßig als Gleichstrommotor konzipiert und oberhalb der Grifföffnung im Gehäuse der Handwerkzeugmaschine untergebracht ist, wobei er das Schlagwerk vorzugsweise über eine Zwischenwelle antreibt. Die Zwischenwelle weist zweckmäßig eine in Bezug zur Drehachse des Antriebsmotors und zur Drehachse der Werkzeughalterung parallel versetzte Drehachse auf und treibt das Schlagwerk vorzugsweise über ein Taumelgetriebe an, während der drehende Antrieb der Werkzeughalterung über zwei Zahnradpaare erfolgt.

Zur Aufnahme verschiedener Werkzeuge umfasst die Werkzeughalterung vorzugsweise eine an beiden Stirnenden offene Aufnahmehülse für einen Schaftteil eines zum Schlagbohren von Mauerwerk oder Beton geeigneten Werkzeugs, eines zum drehenden Bohren von Holz oder Metall geeigneten Werkzeugs sowie eines zum Schrauben geeigneten Werkzeugs. Das zum Schlagbohren geeignete Werkzeug ist vorzugsweise ein sogenanntes SDS-Mini-Bohrwerkzeug mit einem zylindrischen Schaft und zwei parallel zur Längsachse des Schaftes überstehenden Drehmitnehmerstegen, während das zum drehenden Bohren von Holz und Metall geeignete Werkzeug vorzugsweise ein sogenannter HEX-Bohrer ist, der ebenso wie das zum Schrauben geeignete Werkzeug einen Schaft mit einem mindestens abschnittsweise hexagonalen Querschnitt besitzt. Der innere Umfang der Aufnahmehülse begrenzt zwei zu einer Drehachse der Aufnahmehülse parallele, diametral entgegengesetzte Drehmitnahmenuten für die beiden Drehmitnehmerstege der SDS-Mini-Werkzeuge und weist eine Mehrzahl von Umfangsabschnitten auf, wobei jeweils zwei paarweise benachbarte Umfangsabschnitte zur Aufnahme einer der sechs Ecken des Schaftes von HEX-Werkzeugen dienen und einen Winkel von 120 Grad einschließen.

Damit sich sowohl SDS-Mini-Werkzeuge und HEX-Werkzeuge in der Werkzeughalterung sichern lassen, weist die letztere bevorzugt eine Verriegelungseinrichtung zur axialen Verriegelung der im Querschnitt unterschiedlichen Schäfte dieser Werkzeuge auf. Die Verriegelungseinrichtung umfasst vorzugsweise eine oder zwei Rastkugeln, die bei SDS-Mini-Werkzeugen jeweils in eine zugehörige Unterbrechung zwischen zwei Abschnitten von einem oder beiden der zwei Drehmitnehmerstege und bei HEX-Werkzeugen in eine Umfangsnut zwischen zwei hexagonalen Abschnitten des Schaftes eingreift bzw. eingreifen, wenn das Werkzeug in die Werkzeughalterung eingesetzt worden ist, jedoch sind auch andere Verriegelungsmechanismen denkbar.

Gemäß einer weiteren bevorzugten Ausgestaltung der Erfindung umfasst die Handwerkzeugmaschine eine Einrichtung zum Steuern und/oder Regeln der Drehzahl des Antriebsmotors bzw. der Werkzeughalterung, mit der sich eine gewünschte Drehzahl einstellen lässt und mit der vorzugsweise auch eine elektronische Regelung der Drehzahl und/oder des Drehmoments möglich ist.

### Kurze Beschreibung der Zeichnungen

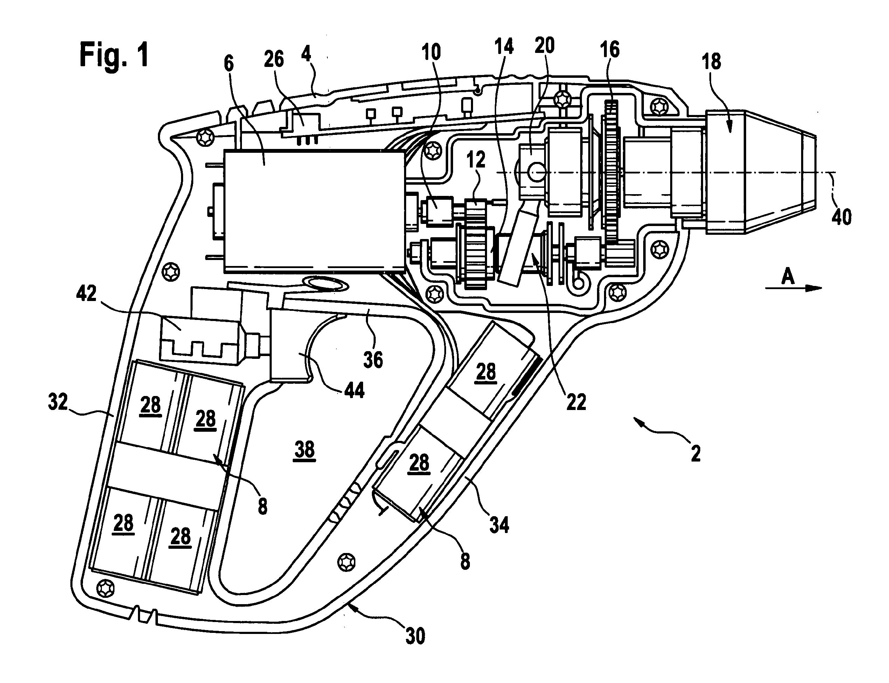

Im folgenden wird die Erfindung anhand eines in der Zeichnung dargestellten Ausführungsbeispiels näher erläutert. Es zeigen
- Fig. 1: einen Längsschnitt durch eine elektrische Handwerkzeugmaschine;
- Fig. 2: einen Längsschnitt durch eine Werkzeughalterung der Handwerkzeugmaschine aus Fig. 1 mit einem sogenannten SDS-Mini-Bohrwerkzeug;
- Fig. 3: eine teilweise weggeschnittene perspektivische Ansicht des Bohrwerkzeugs;
- Fig. 4: eine teilweise geschnittene Stirnseitenansicht von einem Teil der Werkzeughalterung nach dem Einsetzen des Bohrwerkzeugs;
- Fig. 5: einen Längsschnittansicht der Werkzeughalterung nach dem Einsetzen eines sogenannten HEX-Schrauber-Bits;
- Fig. 6: eine perspektivische Ansicht des HEX-Schrauber-Bits;
- Fig. 7: eine perspektivische Ansicht eines HEX-Bohrwerkzeugs;
- Fig. 8: eine teilweise geschnittene Stirnseitenansicht von einem Teil der Werkzeughalterung nach dem Einsetzen des HEX-Schrauber-Bits;
- Fig. 9: eine Detailansicht des Ausschnitts IX aus Fig. 8.
- Fig. 10: eine perspektivische Ansicht einer Aufnahmehülse der Werkzeughalterung;
- Fig. 11: eine Querschnittsansicht der Aufnahmehülse und einer Arretierkugel zur axialen Verriegelung des Werkzeugs.

### Ausführungsform der Erfindung

Die in der Zeichnung dargestellte Handwerkzeugmaschine 2 ist für einen universellen Einsatz zum schlagenden Bohren bzw. Hämmern und zum drehenden Bohren sowie zum Schrauben geeignet und umfasst dazu im Inneren eines zweigeteilten Gehäuses 4 einen elektrischen Antriebsmotor 6, einen Akku 8 zur Stromversorgung des Antriebsmotors 6, eine von einer Abtriebswelle 10 des Motors 6 über ein Stirnradgetriebe 12 drehend angetriebene Zwischenwelle 14, eine von der Zwischenwelle 14 über ein weiteres Stirnradgetriebe 16 drehend angetriebene Kombi-Werkzeughalterung 18, in die wahlweise ein zum schlagenden Bohren oder Hämmern, ein zum drehenden Bohren oder ein zum Schrauben geeignetes Werkzeug eingesetzt werden kann, ein hinter der Werkzeughalterung 18 angeordnetes pneumatisches Schlagwerk 20, mit dem bei Bedarf Schlagkräfte in axialer Richtung auf das in die Werkzeughalterung 18 eingesetzte Werkzeug aufgebracht werden können, sowie ein zwischen der Zwischenwelle 14 und dem Schlagwerk 20 angeordnetes Taumelgetriebe 22, mit dem die Drehbewegung der Zwischenwelle 14 in eine Hin- und Herbewegung eines Schlagkolbens 24 des Schlagwerks 20 und damit des Werkzeugs umgesetzt werden kann.

Der kleine und kompakte Motor 6 ist ein Gleichstrommotor mit einer Steuer- oder Regelelektronik 26, mit der die Drehzahl des Motors 6 und vorzugsweise auch dessen Drehmoment gesteuert werden kann und von der das Drehmoment in Abhängigkeit von der Drehzahl bzw. die Drehzahl in Abhängigkeit von der Last geregelt werden kann.

Der Akku 8 besteht aus insgesamt vier Akkuzellen 28, die im Inneren eines Griffteils 30 des Gehäuses 4 untergebracht sind. Der Griffteil 30 ist etwa U-förmig ausgebildet und weist zwei Schenkel 32, 34 auf, die zusammen mit einem die Schenkel 32, 34 verbindenden Gehäuseteil 36 eine Grifföffnung 38 für eine Hand eines Benutzers umschließen. Der in einer Arbeitsrichtung der Handwerkzeugmaschine (Pfeil A) hinter der Grifföffnung 38 angeordnete, in Bezug zu einer Drehachse 40 der Werkzeughalterung 18 steil geneigte erste Schenkel 32 weist in Arbeitsrichtung gesehen einen länglichen, ovalen Innenquerschnitt auf und beherbergt zwei in Arbeitsrichtung hintereinander angeordnete Akkuzellen 28, während in dem vor der Grifföffnung 38 angeordneten flacher geneigten zweiten Schenkel 34 mit einem in Arbeitsrichtung gesehen breiteren und kürzeren Innenquerschnitt zwei in Arbeitsrichtung nebeneinander angeordnete Akkuzellen 28 (nur eine sichtbar) untergebracht sind. Die Akkuzellen 28 sind zum Austausch durch verschließbare Gehäuseöffnungen (nicht dargestellt) zugänglich. Oberhalb der Akkuzellen 28 im Schenkel 32 befindet sich ein Schalter 42 zum Ein- und Ausschalten des Motors 6, dessen Betätigungselement 44 in die Grifföffnung 38 ragt.

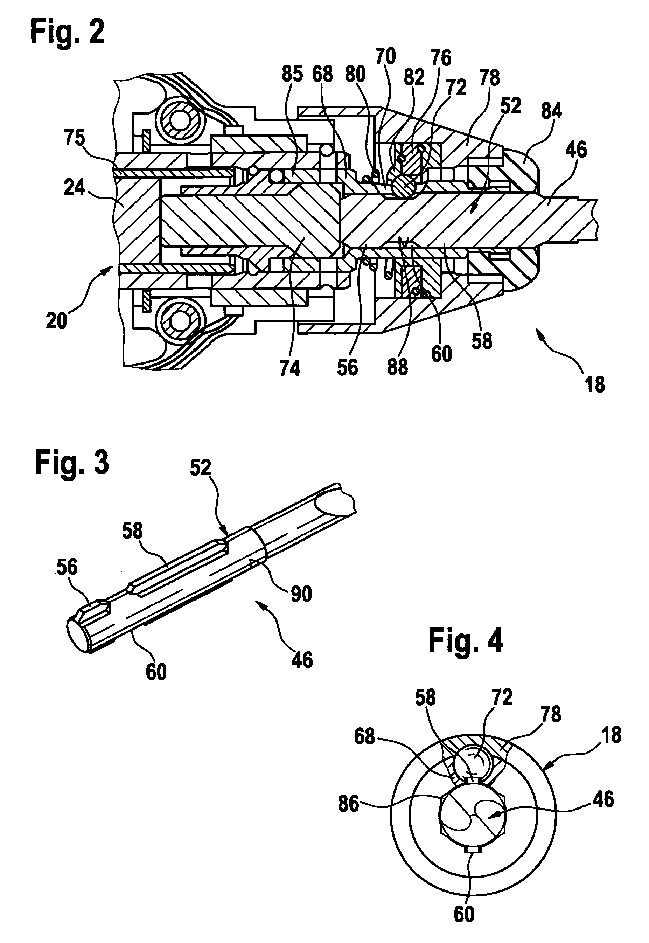

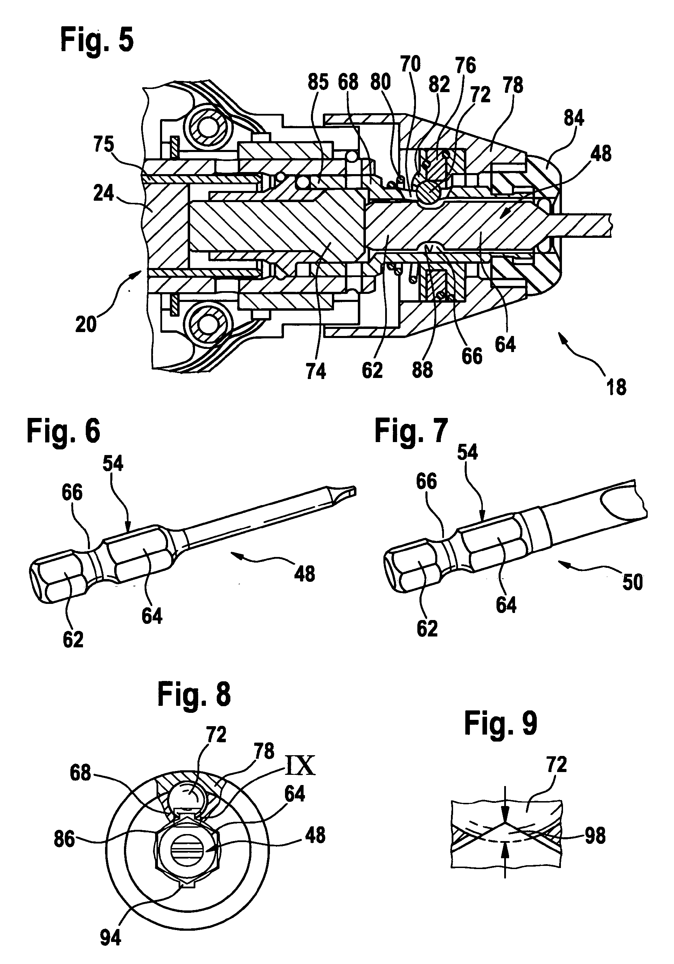

Wie am besten in den Figuren 2 bis 11 dargestellt, lässt sich die Kombi-Werkzeughalterung 18 mit mehreren verschiedenen Werkzeugen bestücken, zum Beispiel mit einem sogenannten "SDS-Mini"-Bohrer 46 (Figuren 2 bis 4), einem Schrauber-Bit 48 (Figuren 5, 6 und 8) oder einem sogenannten HEX-Bohrer 50 (Fig. 7). Diese Werkzeuge 46, 48, 50 weisen unterschiedliche Arten von Schäften auf, nämlich einen Schaft 52 mit "SDS-Mini"-Profil beim Bohrer 46 und einen Schaft 54 mit Sechskant-Profil beim Schrauber-Bit 48 und beim HEX-Bohrer 50.

Bei dem "SDS-Mini"-Profil besitzt der Schaft 52 einen allgemein zylindrischen Querschnitt und an diametral entgegengesetzten Seiten des Querschnitts jeweils einen kürzeren hinteren Drehmitnehmersteg 56 und einen längeren vorderen Drehmitnehmersteg 58 zum drehenden Antreiben des Bohrers 46 sowie zur Drehmomentübertragung auf, die jeweils durch eine Unterbrechung 60 getrennt sind.

Bei dem Schrauber-Bit 48 in Fig. 6 und bei dem HEX-Bohrer 50 in Fig. 7 weist der Schaft 54 zwei im Abstand voneinander angeordnete unterschiedlich lange Abschnitte 62, 64 mit einem regelmäßigen hexagonalen Querschnitt auf, die durch eine genormte Umfangsnut 66 mit einem konkaven gerundeten Querschnitt getrennt sind.

Wie am besten in den Figuren 2 und 5 dargestellt, umfasst die Werkzeughalterung 18 ein an beiden Stirnenden offenes Hammerrohr 68, das im Unterschied zu Spannfuttern vorzugsweise einteilig ausgebildet ist und über die Getriebe 12 und 16 und die Zwischenwelle 14 drehend um seine Längsachse 40 angetrieben wird. Das Hammerrohr 68 ist an seiner Oberseite mit einer Aussparung 70 versehen, durch die eine Verriegelungskugel 72 einer Verriegelungseinrichtung zur axialen Verriegelung des Werkzeugs 46 mit einer der beiden Unterbrechungen 60 der Drehmitnehmerstege 56, 58 bzw. zur axialen Verriegelung des Werkzeugs 48, 50 mit der Nut 66 in Eingriff gebracht werden kann. Die Position und Länge der Unterbrechung 60 beim Werkzeug 46 ist so gewählt, dass trotz des Eingriffs der Verriegelungskugel 72 beim Schlagbohren noch ein für eine ungehinderte Schlagübertragung ausreichendes Axialspiel des Werkzeugs 46 gewährleistet ist. Demgegenüber ist die Position und Länge der Nut 66 beim Werkzeug 48, 50 so gewählt, dass das Werkzeug 48, 50 mit minimalem axialem Spiel im Hammerrohr 68 festgehalten wird, wenn der Schaft des Werkzeugs 48, 50 gegen einen Döpper 74 des Schlagwerks 20 anliegt.

Die Aussparung 70 weist einen konischen Querschnitt auf, der einen vollständigen Eintritt der Kugel 72 ins Innere des Hammerrohrs 68 verhindert. Die Kugel 72 wird in der Aussparung 70 von einem Schließring 76 festgehalten, der das Hammerrohr 68 in Umfangsrichtung umgibt und mittels einer das Gehäuse der Werkzeughalterung 18 bildenden Betätigungshülse 78 entgegen der Kraft einer Verriegelungsfeder 80 in Bezug zum Hammerrohr 68 axial nach hinten verschiebbar ist, um das Werkzeug 46, 48 bzw. 50 vor einer Entnahme freizugeben bzw. zu entriegeln. Zwischen den Schließring 76 und die Verriegelungsfeder 80 ist ein Halteblech 82 eingesetzt, das sich beim Einführen des Werkzeugs 46, 48 bzw. 50 ins Hammerrohr 68 entgegen der Kraft der Feder 70 verschiebt und es dadurch zulässt, dass sich die Kugel 72 von der Längsachse des Hammerrohrs 68 weg nach außen bewegt, bis sich die Unterbrechung 60 bzw. die Nut 66 am Schaft des Werkzeugs 46 bzw. 48, 50 unter die Aussparung 70 schiebt und die Kugel 72 vom Halteblech 82 in die Unterbrechung 60 bzw. in die Nut 66 gedrückt wird. Es sind jedoch auch andere Möglichkeiten zur Verriegelung bzw. Entriegelung der Werkzeuge 46 bzw. 48 und 50 denkbar.

An seinem vorderen, in Arbeitsrichtung weisenden Stirnende trägt das Hammerrohr 68 eine aus einem gummielastischen Material bestehende Staubschutzkappe 84, die über das vordere Stirnende des Hammerrohrs 68 übersteht.

Der Döpper 74 ist innerhalb eines hinteren Teils 85 des Hammerrohrs 68 axial beweglich geführt und wird bei aktiviertem Schlagwerk 20 vom Schlagkolben oder Schläger 24 mit axialen Schlägen beaufschlagt. Der Schlagkolben oder Schläger 24 ist in einen hohlen, an seinem hinteren Stirnende geschlossenen Hammerkolben 75 des Schlagwerks 20 eingesetzt, der nach dem Aktivieren des Schlagwerks 20 von dem auf der Zwischenwelle 14 angebrachten Taumelgetriebe 22 entlang der Achse 40 vor und zurück bewegt wird, wobei diese Bewegung über eine zwischen dem Hammerkolben 75 und dem Schlagkolben oder Schläger 24 angeordnete Luftfeder (nicht dargestellt) auf den Schlagkolben oder Schläger 24 übertragen wird.

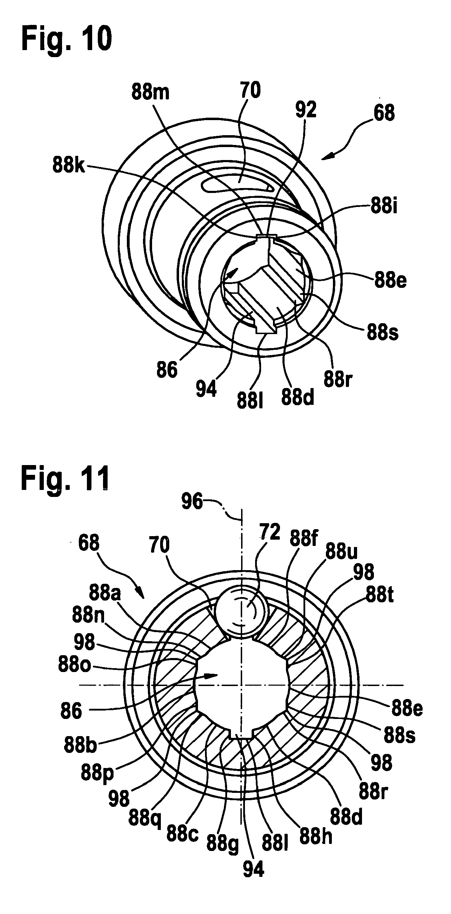

Wie am besten in Fig. 10 und 11 dargestellt, weist eine zur Aufnahme der Schäfte der Werkzeuge 46, 48, 50 dienende, die Drehachse 40 umgebende Ausnehmung 86 des Hammerrohrs 68 eine innere Umfangsfläche 88 auf, die in Umfangsrichtung in eine Mehrzahl von Umfangsflächenabschnitten unterteilt ist. Diese Umfangsflächenabschnitte 88a bis 88u umfassen sechs teilzylindrische Umfangsflächenabschnitte 88a bis 88f und insgesamt vierzehn ebene Umfangsflächenabschnitte 88g bis 88u.

Ein von den sechs teilzylindrischen Umfangsflächenabschnitten 88a bis 88f aufgespannter gedachter Zylinder weist eine mit der Drehachse 40 zusammenfallende Mittelachse und einen dem Radius einer zylindrischen Umfangsfläche 90 des Schaftes 52 des "SDS-Mini"-Werkzeugs 46 entsprechenden Radius auf, so dass die Umfangsflächenabschnitte 88a bis 88f nach dem Einführen des Schaftes 52 dieses Werkzeugs 46 in das Hammerrohr 68 dieser Umfangsfläche 90 im Wesentlichen spielfrei gegenüberliegen. Die Mitten der Umfangsflächenabschnitte 88a bis 88f sind jeweils in gleichen Winkelabständen von 60 Grad um die Drehachse 40 verteilt.

Sechs der vierzehn ebenen Umfangsflächenabschnitte 88g bis 88m begrenzen zwei diametral gegenüberliegende Mitnahmenuten 92, 94, die zur Aufnahme der Drehmitnehmerstege 56, 58 am Schaft 52 des "SDS-Mini"-Werkzeugs 46 dienen, entsprechende Querschnittsabmessungen wie die Drehmitnehmerstege 56, 58 aufweisen und jeweils von zwei parallelen Flanken 88g, 88h bzw. 88i, 88k und einem zu diesen senkrechten Nutgrund 881 bzw. 88m begrenzt werden, wobei sich die Flanken 88g bis 88k jeweils von benachbarten teilzylindrischen Umfangsflächenabschnitten 88a bis 88f aus nach außen erstrecken. Die Nuten 92, 94 sind so ausgerichtet, dass eine davon mittig durch die Aussparung 70 des Hammerrohrs 68 verläuft.

Die übrigen acht ebenen Umfangsflächenabschnitte 88n bis 88u sind spiegelsymmetrisch beiderseits einer durch die Mitten der Nuten 92, 94 verlaufenden Ebene 96 angeordnet und grenzen an vier Scheitellinien 98 jeweils paarweise unter einem Innenwinkel von 120 Grad aneinander. Die Winkelabstände zwischen den vier Scheitellinien 98 sind äquivalent zu den Winkelabständen der entsprechenden Kanten des Sechskant-Profils der Schäfte 54 der HEX-Werkzeuge 48, 50 und betragen jeweils 60 Grad oder ein Vielfaches von 60 Grad. Die Scheitellinien 98 spannen einen gedachten, zur Drehachse 40 koaxialen Zylinder auf, dessen Durchmesser größer als der Durchmesser des gedachten, von den teilzylindrischen Umfangsflächenabschnitten 88a bis 88f aufgespannten Zylinders ist, während das Schlüsselmaß eines gedachten, von den acht ebenen Umfangsflächenabschnitten 88n bis 88u aufgespannten Außensechskants kleiner als der Durchmesser dieses letzteren Zylinders ist. Der gedachte Außensechskant weist zwei zur Ebene 96 parallele Flächen auf, so dass die Kugel 72 eine Ecke 98 des Sechskant-Profils des Werkzeugs 48, 50 hintergreift, wie in Fig. 9 dargestellt.

Die Werkzeugmaschine 2 lässt sich somit ohne die Notwendigkeit eines Adapters für die Werkzeughalterung 18 sowohl zum Bohren mit oder ohne Schlag als auch zum Schrauben einsetzen, nachdem das jeweils passende Werkzeug 46, 48, 50 in die Werkzeughalterung 18 eingeführt und in dieser verriegelt worden ist.

Die Werkzeughalterung 18 eignet sich auch zur Aufnahme von Werkzeugen, wie kurzen Schrauber-Bits, deren Schaft zwar ein Sechskant-Profil, jedoch keine Nut 66 besitzt. In diesem Fall werden die Werkzeuge allerdings nicht in der Werkzeughalterung 18 verriegelt.

## Patentansprüche

1. Elektrische Handwerkzeugmaschine (2), mit einem elektrischen Antriebsmotor (6), einer vom Antriebsmotor (6) über ein Getriebe (12, 16) drehend angetriebenen Werkzeughalterung (18), die zur Aufnahme eines zum schlagenden Bohren oder Hämmern, eines zum drehenden Bohren oder eines zum Schrauben geeigneten Werkzeugs (46, 48, 50) angepasst ist, sowie einem pneumatischen Schlagwerk (20) zum Aufbringen von Schlägen auf ein in die Werkzeughalterung (18) eingesetztes Werkzeug (46), wobei ein Akku (8) zur Stromversorgung des Antriebsmotors (6) innerhalb eines Gehäuses (4) der Handwerkzeugmaschine (2) untergebracht ist, **dadurch gekennzeichnet, dass** in zwei Schenkeln (32, 34) eines U-förmigen Griffteils (30) des Gehäuses (4) jeweils eine oder mehrere Akkuzellen (28) des Akkus (8) untergebracht sind.

2. Elektrische Handwerkzeugmaschine nach Anspruch 1, **dadurch gekennzeichnet, dass** die Werkzeughalterung (18) eine an beiden Stirnenden offene Aufnahmehülse (68) für einen Schaftteil (52, 54) des Werkzeugs (46, 48, 50) umfasst, und dass eine innere Umfangsfläche (88) der Aufnahmehülse (68) in Umfangsrichtung mindestens acht ebene Umfangsflächenabschnitte (88n, 88o, 88p, 88q, 88r, 88s, 88t, 88u) umfasst, wobei jeweils paarweise benachbarte Umfangsflächenabschnitte (88n, 88o; 88p, 88q; 88r, 88s; 88t, 88u) einen Winkel von 120 Grad einschließen.

3. Elektrische Handwerkzeugmaschine nach einem der vorangehenden Ansprüche, **dadurch gekennzeichnet, dass** die Werkzeughalterung (18) eine an beiden Stirnenden offene Aufnahmehülse (68) für einen Schaftteil (52, 54) des Werkzeugs (46, 48, 50) umfasst, und dass eine innere Umfangsfläche (88) der Aufnahmehülse (68) in Umfangsrichtung mindestens sechs teilzylindrische Umfangsflächenabschnitte (88a, 88b, 88c, 88d, 88e, 88f) umfasst.

4. Elektrische Handwerkzeugmaschine nach einem der vorangehenden Ansprüche, **dadurch gekennzeichnet, dass** die Werkzeughalterung (18) eine an beiden Stirnenden offene Aufnahmehülse (68) für einen Schaftteil (52, 54) des Werkzeugs (46, 48, 50) umfasst, und dass eine innere Umfangsfläche (88) der Aufnahmehülse (68) mindestens eine zu einer Drehachse (40) der Aufnahmehülse (68) parallele Drehmitnahmenut (92, 94) für einen über einen zylindrischen Schaft (52) überstehenden Drehmitnehmersteg (56, 58) des Werkzeugs (46) begrenzt.

5. Elektrische Handwerkzeugmaschine nach einem der vorangehenden Ansprüche, **gekennzeichnet durch** eine Verriegelungseinrichtung (70, 72) zur axialen Verriegelung von Werkzeugen (46, 48, 50) mit unterschiedlichem Schaftquerschnitt in der Werkzeughalterung (18).

6. Elektrische Handwerkzeugmaschine nach einem der vorangehenden Ansprüche, **gekennzeichnet durch** eine Einrichtung (26) zur Steuerung und/oder Regelung der Drehzahl des Antriebsmotors (6) bzw. der Werkzeughalterung (18).

7. Elektrische Handwerkzeugmaschine nach Anspruch 6, **dadurch gekennzeichnet, dass** die Einrichtung (26) zur Steuerung und/oder Regelung der Drehzahl des Antriebsmotors (6) bzw. der Werkzeughalterung (18) eine elektronische Drehzahlregeleinrichtung umfasst.

8. Elektrische Handwerkzeugmaschine nach Anspruch 6 oder 7, **dadurch gekennzeichnet, dass** die Einrichtung (26) zur Steuerung und/oder Regelung der Drehzahl des Antriebsmotors (6) bzw. der Werkzeughalterung (18) eine elektronische Drehmomentregeleinrichtung umfasst.

## Claims

1. Electric hand-held power tool (2), having an electric drive motor (6), having a tool holder (18) which is driven in rotation by the drive motor (6) via a gearing (12, 16) and which is designed for receiving a tool (46, 48, 50) suitable for percussive drilling or hammering, for rotary drilling or for screwing, and having a pneumatic percussion mechanism (20) for imparting percussive impacts to a tool (46) that is inserted into the tool holder (18), wherein a battery (8) for the electrical supply to the drive motor (6) is accommodated within a housing (4) of the hand-held power tool (2), **characterized in that** in each case one or more battery cells (28) of the battery (8) is/are accommodated in two legs (32, 34) of a U-shaped handle part (30) of the housing (4).

2. Electric hand-held power tool according to Claim 1, **characterized in that** the tool holder (18) comprises a receiving sleeve (68), which is open at both face ends, for a shank part (52, 54) of the tool (46, 48, 50), and **in that** an inner circumferential surface (88) of the receiving sleeve (68) comprises, in a circumferential direction, at least eight planar circumferential surface sections (88n, 88o, 88p, 88q, 88r, 88s, 88t, 88u), wherein circumferential surface sections that are respectively adjacent in paired fashion (88n, 88o; 88p, 88q; 88r, 88s; 88t, 88u) enclose an angle of 120°.

3. Electric hand-held power tool according to one of the preceding claims, **characterized in that** the tool holder (18) comprises a receiving sleeve (68), which is open at both face ends, for a shank part (52, 54) of the tool (46, 48, 50), and **in that** an inner circumferential surface (88) of the receiving sleeve (68) comprises, in the circumferential direction, at least six partially cylindrical circumferential surface sections (88a, 88b, 88c, 88d, 88e, 88f).

4. Electric hand-held power tool according to one of the preceding claims, **characterized in that** the tool holder (18) comprises a receiving sleeve (68), which is open at both face ends, for a shank part (52, 54) of the tool (46, 48, 50), and **in that** an inner circumferential surface (88) of the receiving sleeve (68) delimits at least one rotary driving groove (92, 94), which is parallel to an axis of rotation (40) of the receiving sleeve (68), for a rotary driving web (56, 58), which projects beyond a cylindrical shank (52), of the tool (46).

5. Electric hand-held power tool according to one of the preceding claims, **characterized by** a locking device (70, 72) for the axial locking of tools (46, 48, 50) with different shank cross section in the tool holder (18).

6. Electric hand-held power tool according to one of the preceding claims, **characterized by** a device (26) for controlling and/or regulating the rotational speed of the drive motor (6) and of the tool holder (18).

7. Electric hand-held power tool according to Claim 6, **characterized in that** the device (26) for controlling and/or regulating the rotational speed of the drive motor (6) and of the tool holder (18) comprises an electronic rotational speed regulating device.

8. Electric hand-held power tool according to Claim 6 or 7, **characterized in that** the device (26) for controlling and/or regulating the rotational speed of the drive motor (6) and of the tool holder (18) comprises an electronic torque regulating device.

## Revendications

1. Machine-outil à main électrique (2) comprenant un moteur d'entraînement électrique (6), une fixation d'outil (18) entraînée en rotation par le moteur d'entraînement (6) par le biais d'une transmission (12, 16), laquelle est prévue pour recevoir un outil (46, 48, 50) prévu pour le perçage ou le martelage par percussion, pour le perçage rotatif ou pour le vissage, ainsi qu'un mécanisme de percussion pneumatique (20) destiné à appliquer des coups sur un outil (46) inséré dans la fixation d'outil (18), un accumulateur (8) étant monté à l'intérieur d'un boîtier (4) de la machine-outil à main (2) pour l'alimentation électrique du moteur d'entraînement (6), **caractérisée en ce que** dans deux branches (32, 34) d'une partie de poignée en forme de U (30) du boîtier (4) sont montées dans chaque cas une ou plusieurs batteries d'accumulateur (28) de l'accumulateur (8).

2. Machine-outil à main électrique selon la revendication 1, **caractérisée en ce que** la fixation d'outil (18) comprend une douille de réception (68) ouverte aux deux extrémités frontales pour une partie de tige (52, 54) de l'outil (46, 48, 50), et **en ce qu'**une surface périphérique interne (88) de la douille de réception (68) comprend, dans la direction périphérique, au moins huit portions de surface périphérique planes (88n, 88o, 88p, 88q, 88r, 88s, 88t, 88u), des portions de surface périphérique respectivement adjacentes par paires (88n, 88o ; 88p, 88q ; 88r, 88s ; 88t, 88u) formant un angle de 120°.

3. Machine-outil à main électrique selon l'une quelconque des revendications précédentes, **caractérisée en ce que** la fixation d'outil (18) comprend une douille de réception (68) ouverte aux deux extrémités frontales pour une partie de tige (52, 54) de l'outil (46, 48, 50), et **en ce qu'**une surface périphérique interne (88) de la douille de réception (68) comprend, dans la direction périphérique, au moins six portions de surface périphérique partiellement cylindriques (88a, 88b, 88c, 88d, 88e, 88f).

4. Machine-outil à main électrique selon l'une quelconque des revendications précédentes, **caractérisée en ce que** la fixation d'outil (18) comprend une douille de réception (68) ouverte aux deux extrémités frontales pour une partie de tige (52, 54) de l'outil (46, 48, 50), et **en ce qu'**une surface périphérique interne (88) de la douille de réception (68) délimite au moins une rainure d'entraînement en rotation (92, 94) parallèle à un axe de rotation (40) de la douille de réception (68) pour une nervure d'entraînement en rotation (56, 58) de l'outil (46) faisant saillie au-delà d'une tige cylindrique (52).

5. Machine-outil à main électrique selon l'une quelconque des revendications précédentes, **caractérisée par** un dispositif de verrouillage (70, 72) pour le verrouillage axial d'outils (46, 48, 50) avec une section transversale de tige différente dans la fixation d'outil (18).

6. Machine-outil à main électrique selon l'une quelconque des revendications précédentes, **caractérisée par** un dispositif (26) de commande et/ou de régulation de la vitesse de rotation du moteur d'entraînement (6) ou de la fixation d'outil (18).

7. Machine-outil à main électrique selon la revendication 6, **caractérisée en ce que** le dispositif (26) de commande et/ou de régulation de la vitesse de rotation du moteur d'entraînement (6) ou de la fixation d'outil (18) comprend un dispositif de régulation électronique de la vitesse de rotation.

8. Machine-outil à main électrique selon la revendication 6 ou 7, **caractérisée en ce que** le dispositif (26) de commande et/ou de régulation de la vitesse de rotation du moteur d'entraînement (6) ou de la fixation d'outil (18) comprend un dispositif de régulation électronique du couple.
